Europäisches Patentamt

European Patent Office

Office européen des brevets

(11) Publication number: **0 443 452 A2**

# (12) EUROPEAN PATENT APPLICATION

(21) Application number: **91102157.4**

(22) Date of filing: **15.02.91**

(51) Int. Cl.⁵: **B29C 55/18**, B29C 59/00,
//B29L7:00

(30) Priority: **19.02.90 JP 36269/90**

(43) Date of publication of application:
**28.08.91 Bulletin 91/35**

(84) Designated Contracting States:
**DE FR GB**

(71) Applicant: **CHISSO CORPORATION**
**6-32, Nakanoshima 3-chome Higashi-ku**
**Osaka-shi Osaka 530(JP)**

(72) Inventor: **Arase, Susumu**
**511-6, Ogisaku**
**Ichihara-shi, Chiba(JP)**
Inventor: **Yokota, Junichiro**
**17, Tatsumidai-higashi 2-chome**
**Ichihara-shi, Chiba(JP)**
Inventor: **Takasu, Hiroshi**
**15-10, Wakamiya 5-chome**
**Ichihara-shi, Chiba(JP)**

(74) Representative: **Hansen, Bernd, Dr.**
**Dipl.-Chem. et al**
**Hoffmann, Eitle & Partner Patent- und**
**Rechtsanwälte Arabellastrasse 4 Postfach**
**81 04 20**
**W-8000 München 81(DE)**

(54) One-side roughened rolled plane body and production thereof.

(57) A one-side roughened plane body comprises a crystalline thermoplastic resin, one side of the body being roughened, the other side of the resin being smooth and the plane body being characterized in that the overall haze thereof is not less than 50% and that the internal haze thereof is not more than 15%.

A process for producing a one-side roughened rolled plane body comprises the steps of rolling a plane body of a crystalline thermoplastic resin is rolled at a temperature equal to or less than the melting point of the thermoplastic resin and at a draft of 30% or more to thereby make the internal haze of the plane body 15%, and roughening one side of the plane body simultaneously with or after rolling to make the overall haze of the plane body not less than 50%.

BACKGROUND OF THE INVENTION

(Field of the Invention)

The present invention relates to a rolled plane body (the plane body referring to plate, sheet or film) which is excellent in mechanical strength and capable of being partially made transparent and in which a roughened surface is opaque.

(Description of the Prior Art)

The rolled plane body obtained by rolling a primary moldings such as a plate, a sheet or a film of a crystalline thermoplastic resin has excellent mechanical strength and transparency. Thus, the rolled plane bodies have widely been used in various applications wherein transparency is required, while making use of the merit that they are excellent in transparency.

In addition, there has already been known a film of polyolefin, which has different smoothness between both sides thereof, one side of which is surface-roughened and the other of which is smooth (see Japanese Patent Examined Publication (hereinafter referred to as "J.P. KOKOKU") No. Sho 50-18438). However, in this film whose both sides have different smoothness, the surface-roughening treatment is not performed for imparting opacity to only the surface thereof and rather the surface roughness thereof is mainly ascribed to the irregularity of the surface due to the characteristic properties of the used resin per se. Moreover, this technique is not developed for the purpose of subsequently imparting partial transparency to the surface-roughened film and, therefore, either of the external and internal haze of the film is not limited to a specific range.

Alternatively, there has been a technique for forming a packaging material such as a vessel or a bag having a specified compositional change in the direction of the thickness of a resin layer of the material in order to impart the desired properties to the material (see U.S. Patent Nos. 3,857,754 and 3,975,463). Physical properties required for the material produced according to this technique are, for instance, tear strength of bags, resistance to brittleness at low temperature and gas barrier properties unlike the desired properties of the plane body of the present invention. In this technique, the transparency is not specified to a predetermined range by adopting a combination of rolling and surface-roughening treatment, i.e., both the external and internal hazes are not specified to a desired ranges as in the present invention.

SUMMARY OF THE INVENTION

Accordingly, the object of the present invention is to provide a plane body which is opaque as a whole and which can suitably be used in various fields wherein it is desired that only the desired portion thereof can be made transparent when it is used.

According to one aspect of the present invention, there is provided a one-side roughened plane body which is produced from a crystalline thermoplastic resin and one side of which is roughened and the other of which is smooth and the plane body is characterized in that the overall haze thereof is not less than 50% and that the internal haze thereof is not more than 15%.

According to another aspect of the present invention, there is provided a process for producing a one-side roughened rolled plane body which comprises the steps of rolling a plane body of a crystalline thermoplastic resin at a temperature equal to or less than the melting point of the thermoplastic resin and at a thickness reduction of 30% or more to thereby make the internal haze of the resin layer 15% or less, and roughening one side of the plane body simultaneously with or after the rolling to make the overall haze not less than 50%.

DESCRIPTION OF THE PREFERRED EMBODIMENTS

The present invention will hereunder be described in more detail.

The present invention relates to a plane body which is formed from a crystalline thermoplastic resin as will be detailed below and whose one side is roughened and the other side is smooth and which is characterized in that the overall haze thereof is 50% or higher and that the internal haze thereof is 15% or lower. In general, polyolefin resins, in particular polyethylene, polypropylene or the like among the crystalline resins cannot provide a plane body having high transparency such that the internal haze thereof is 15% or lower if they are simply formed into a plane body. The plane body according to the present invention has low internal haze almost comparable to the plane bodies obtained from non-crystalline resins

2

although it is formed from a crystalline resin.

In the one-side roughened rolled plane body according to the present invention obtained from a crystalline thermoplastic resin, one side thereof is smooth and the internal haze thereof is not more than 15%, preferably not more than 12%, more preferably not more than 8% and most preferably not more than 6%.

In this case, the surface smoothness is not more than 0.5 S, preferably not more than 0.2 S expressed in terms of surface roughness as determined according to ISO R466 and is not less than 70% expressed in terms of glossiness.

The other side of the plane body is a roughened surface, for instance, a surface having pear-skin and has an external haze of 50% or higher, preferably 55% or higher.

The overall haze of the plane body of the present invention can be determined according to ASTM D1008 as will be detailed below. Then the surface of the plane body on the roughened side is smoothened by a proper means such as application of a transparent liquid to determine the internal haze thereof. The external haze is defined as the difference between the overall haze and the internal haze.

Since one side of the plane body of the present invention is a roughened surface, it is opaque to an extent that its overall haze is in the order of 50 to 90%, but it can easily be made transparent, due to the substantial reduction of the internal haze by the rolling operation and the internal haze thereof is reduced to a level of the order of 0.5 to 10%. Thus, if a desired portion of the roughened side of the plane body is subjected to a treatment for making the roughened state a smooth state, only such a desired portion can be made transparent. As means for making the roughened surface transparent (means for eliminating the surface roughness), there may be mentioned, for instance, application of a transparent tape, coating of a transparent liquid or application of a transparent adhesive.

It is also effective to subject roughened surface to an activation treatment such as corona discharge treatment or a chemical oxidation treatment in order to make the surface transparent more efficiently. It is thought that this effectiveness is due to an increased affinity, to an adhesive or a liquid, of the surface subjected to the activation treatment and correspondingly the improved adhesion of the roughened surface to the foregoing means for eliminating the surface roughness.

As the process for producing the foregoing plane body, preferred is one comprising rolling a plate or sheet of a raw resin at a temperature of not more than the melting point of the raw resin as will be defined below and the thickness reduction (r) during the cold rolling is controlled to a level of not less than 30% and preferably not less than 40%:

$$r = 100 \times (h_1 - h_2)/h_1 \ (\%)$$

Wherein $h_1$ represents the initial thickness of the plane body before rolling and $h_2$ is the thickness of the plane body after rolling.

When the rolling operation is performed at the thickness reduction falling within the foregoing range, the mechanical strength such as the tensile strength of the resulting plane body is increased to not less than about 3 times, preferably about 3 to 5 times that of the plane body before rolling while the internal haze thereof is reduced to a level of about 1/10.

The term "melting point of the raw resin" is herein defined to be a temperature at which the maximum area-occupying peak of the thermal behavior curve of the resin as determined by differencial scanning calorimeter (DSC) according to JIS K7121.

The final thickness of the rolled plane body of the present invention is in general adjusted to 0.05 to 20 mm, preferably 0.1 to 10 mm.

[ Preparation of Plane Body ]

The rolled plane body of the present invention can be produced according to various process and, for instance, the processes listed below can be adopted:

One such process comprises subjecting a material for the plane body to a rolling treatment with a pair of rolls or caterpillars which are, respectively, rotated in the directions opposite to one another and in which one roll or caterpillar has a mirror-finished surface and the other roll or caterpillar has satin-finished surface to thus simultaneously perform rolling and surface-roughening treatments;

Processes comprise the steps of rolling a material for the plane body with a pair of rolls or caterpillars having mirror-finished surfaces to form the material into a transparent plane body and then surface-roughening one side thereof by subjecting it to one of the following treatments:

Thermal treatment: instantaneously blowing, on the desired side of the plane body, a gas having a

3

temperature of not less than the melting point of the raw resin material;

Chemical treatment: treating the plane body with chemicals capable of dissolving or swelling the same;

Mechanical treatment: for instance, rubbing the surface of plane body with a brush roll or a filing roll; blasting a liquid containing sands or fine pieces of a metal (so-called shot blasting treatment) to thus form scratch markes on the surface thereof; pressing the plane body with a press one side of which is roughened; pressing the plane body through a hard material having a roughened surface to transfer the roughness pattern to the plane body; or passing through a pair of rolls or caterpillars which are rotated in the opposite directions respectively and which have a mirror-finished surface and mat-finished surface respectively to thus transfer the roughness pattern to the plane body; and

A process in which a transparent sheet is laminated with a sheet whose overall haze is not less than 50% and whose internal haze is substantially reduced.

When the plane body is prepared by laminating a transparent sheet with a sheet whose overall haze is not less than 50%, the internal haze of the sheet laminated must be a substantially reduced in order to prepare the sheet according to the present invention.

In order to obtain a plane body which have desired surface conditions to be imparted to the plane body of the present invention, the mechanical treatment is most practicable among others. In particular, it is preferred to use a roll or a pressing plate which is subjeted to a shot blasting processing to an extent of 50 to 1,000 mesh and preferably 100 to 600 mesh, as the roughening roll.

[Materials for Plane Bodies]

As materials for producing the rolled plane body of the present invention, it is preferred to use crystalline thermoplastic resins (hereinafter also referred to as simply "thermoplastic resins"). Specific examples of such thermoplastic resins are crystalline polyolefinic resins such as highly stereoregular polypropylene resins (PP), high-density polyethylenes (HDPE), medium-density polyethylenes (MDPE), linear low-density polyethylenes (L-LDPE), ultra-high molecular weight polyethylenes (UHM-PE), ethylene-propylene copolymers, poly(1-butene) and polymethylpentenes; polyamide resins such as nylon-6, nylon-6,6, nylon-6,10, nylon-11 and nylon-12; and polyester resins such as polyethylene terephthalate (PET) and polybutylene terephthalate (PBT).

Among these, preferred are crystalline polyolefinic resins because of their balance between the transparency, easiness of molding or the like. More preferably, the crystalline polyolefinic resins are those containing solid substances which remain after the crystalline polyolefin is extracted with boiling heptane in an amount of not less than 70% by weight, preferably not less than 80% by weight on the basis of the initial amount of the polyolefinic resin.

To these thermoplastic resins, there may, if necessary, be added, for instance, various stabilizers, stabilizing aids as well as additives. Examples of such stabilizers are heat stabilizers, antioxidants, weathering stabilizers or light-inhibitors and hydrochloric acid-captures. Examples of the additives are antistatic agents, slip agents (antiblocking agents), nucleating agents and coloring agents.

The present invention will hereunder be explained in more detail with reference to the following Examples, but the present invention is not restricted to these specific Examples at all. Moreover, the effect practically attained by the present invention will also be discussed in detail in comparison with Comparative Examples. In the following Examples and Comparative Examples, the measurements of the haze and the tensile strength are performed according to ASTM-D1008 and ASTM-D882, respectively.

Examples 1 to 5 and Comparative Example 1

A crystalline polypropylene (MFR (230 ° C; 2.16 kg) 0.7 g/10 min.; available from CHISSO CORPORATION under the trade name of CHISSOPOLYPRO) was subjected to melt extrusion at 250 ° C from the T die (width of tip = 450 mm; lip clearance = 0.8 mm) of an extruder having a bore diameter of 60 mm, formed into a sheet (width 390 mm × thickness 0.5 mm) by passing through a pair of chill rolls (temperature: 60 ° C ) and the central portion of the obtained sheet was slit at a width of 100 mm to thus form a sheet (width 100 mm × thickness 0.5 mm).

The properties of the resulting non-rolled sheet are shown in Table 1 as Comparative Example 1. Then the lip clearance of the T die (width 450 mm) was adjusted to 1.9 mm, the same melt extrusion procedures were repeated to form sheets, the central portion thereof was slit to obtain raw sheets for rolling (width 100 mm × thickness 1.5 mm (hereunder referred to as "raw sheet")) in the form of rollstocks.

These raw sheets were rolled by passing them through a pair of rolls (roll width 130 mm × diameter 120 mm; roll surface temperature 120 ° C) to form rolled sheets. The conditions for the rolling operation

4

and the rolls used are as follows:

One of the paired rolls had a mirror-finished surface having a surface roughness of 0.2 S and the other roll was subjected to a shot blasting treatment of 200 mesh to impart mat-finished pattern to the surface thereof. The rolling operation was performed with the paired rolling rolls under a rolling force (practical load) of 3 tonf, 5 tonf, 7 tonf, 9 tonf or 2.5 tonf respectively.

The properties of each rolled sheets determined in the manner detailed above are summarized in the following Table 1 as Examples 1 to 5. These sheets each was cut into pieces having a length of 10 cm, a commercially available transparent adhesive tape having a size of 50 mm long × 17 mm wide was adhered to the roughened surface of the piece, a calender hung on a wall at a distance of 3 m was observed through the piece to determine whether letters (letter size of 2 cm lengthwise and 3 cm crosswise) printed on the calender could be clearly distinguished or not.

As a result, when the letters were observed through the portion of the piece on which the adhesive tape had been adhered, they could be clearly distinguished because of the transparency of the portion, but when they were observed through the portion free of the adhesive tape, the letters could not clearly be distinguished due to the opacity thereof.

Moreover, the sheet of Comparative Example 1 was opaque even when an adhesive tape was adhered to the sheet and hence even the presence of the letters on the calender could not be recognized in this case.

Comparative Example 2

The same procedures as used in Example 4 were repeated except that a pair of mirror-finished rolls having a surface roughness of 0.2 S were used as rolling rolls to form a transparent sheet A (width 100 mm × thickness 0.375 mm) in the form of a rollstock. The overall haze of this transparent sheet A was 0.8% and the internal haze thereof was 0.5%.

Then the same thermoplastic resin as used in Comparative Example 1 was subjected to melt extrusion at 250 $^\circ$ C and passed through a pair of chill rolls one of which had been subjected to shot-blasting of 200 mesh and the other of which had been mirror-finished to a surface roughness of 0.2 S to thus give an extruded sheet B (width 390 mm× thickness 0.25 mm). The overall haze of the extruded sheet B was 50% and the internal haze thereof was 48%.

Then the transparent sheet A obtained above was introduced between the paired chill rolls for forming an extruded sheet B from the mirror-finished roll side at the center thereof while forming an extruded sheet B to give a laminate sheet comprising the sheets A and B, the laminate sheet was slit at its center to form a laminate sheet C (width 100 mm × thickness 0.6 mm) in which one side had been surface-roughened and the other side was mirror-finished. The properties of this sheet C determined in the same manner described above are also listed in the following Table 1.

The opacity of the sheet C of Comparative Example 2 was not lowered even when a transparent adhesive tape was adhered onto the roughened side thereof and correspondingly, even the presence of the letters printed on the calender could not be recognized when they were observed through the sheet.

Comparative Example 3

The same PP resin as used in Examples 1 to 5 and Comparative Example 1 was extruded and formed through a T die (width 450 mm; the lip clearance was adjusted to 1.9 mm) to form a sheet and the obtained sheet was slit at its center to give a raw sheet for rolling [ width 100 mm× thickness 1.5 mm (hereunder referred to as "raw sheet") ] in the form of a rollstock.

The raw sheet was rolled through a pair of rolls (roll width 130 mm × diameter 120 mm; roll surface temperature 120 $^\circ$ C ) at a rolling force of 1 tonf to give a rolled sheet.

Each roll which constitutes the paired rolls had the same surface roughness as those for the corresponding rolls used in Examples 1 to 5 and Comparative Example 1.

The physical properties of the resulting rolled sheet determined in the same manner as described above are summarized in the following Table 1 as Comparative Example 3. The test for making a part of the sheet transparent was performed in the same manner as used in the foregoing Examples and Comparative Examples.

As a result, even the presence of letters could not be clearly recognized even when the letters were observed through a portion of the sheet on which an adhesive tape had been pasted. In other words, the portion cannot be made transparent even if a transparent adhesive tape was adhered thereto.

Examples 6 and 7 and Comparative Example 4

A commercially available polyamide resin (available from Toray Industries, Inc. under the trade name of AMIRANE CM21) was processed in the same apparatus to form a raw sheet for rolling.

More specifically, the resin was subjected to melt extrusion at an extrusion temperature of 260 °C through a T die (width 450 mm; lip clearance 0.8 mm), formed into a sheet (width 370 mm; thickness 0.5 mm) at a chill roll temperature of 60 °C and the sheet was slit as in Example 1 to give a raw sheet (width 100 mm; thickness 0.5 mm). The physical properties of the resulting raw sheet determined in the same manner as used in Example 1 are listed in the following Table 1 as Comparative Example 4.

Then the raw sheet was rolled through the same paired rolls for rolling as those used in Example 1 in the same manner as used in Example 1 except that the rolling roll temperature was changed to 160 °C, under a rolling force of 5 tonf or 7 tonf to give a rolled sheet. The physical properties of the resulting rolled sheets determined in the same manner as used in Example 1 are listed in the following Table 1 as Examples 6 and 7.

These sheets each was cut into pieces having a length of 10 cm, a commercially available transparent adhesive tape having a size of 50 mm long × 17 mm wide was adhered to the roughened surface of the piece, a calender hung on a wall at a distance of 3 m was observed through the piece to determine whether letters (letter size of 2 cm lengthwise and 3 cm crosswise) printed on the calender could be clearly distinguished or not.

As a result, when the letters were observed through the portion of the piece on which the adhesive tape had been adhered, they could be clearly distinguished due to the transparency of the portion, but when they were observed through the portion free of the adhesive tape, the letters could not clearly be distinguished due to the opacity thereof.

Moreover, the sheet of Comparative Example 4 was opaque even when an adhesive tape was adhered to the sheet and hence even the presence of the letters on the calender could not be clearly recognized in this case.

The surface-roughened rolled plane body according to the present invention is opaque as a whole, but can be made only a desired portion thereof transparent, if necessary, since the internal haze thereof is reduced to a very low level through a rolling treatment. Therefore, the plane body of the present invention can be effectively used in wide variety of applications such as containers, packaging materials, packing materials and covering sheets.

Table 1

| Ex. No. | Raw resin | Rolling Force (tonf) | Rolled Sheet wide (mm) | thick (mm) | Thickness Reduction (%) | Tensile Strength (kgf/mm²) | Haze (%) overall | internal |
|---|---|---|---|---|---|---|---|---|
| Ex. 1 | PP | 3 | 100 | 0.785 | 47.7 | 11.8 | 74.5 | 4.8 |
| Ex. 2 | PP | 5 | 100 | 0.530 | 66.4 | 17.5 | 66.6 | 2.5 |
| Ex. 3 | PP | 7 | 100 | 0.458 | 71.5 | 22.1 | 60.4 | 0.8 |
| Ex. 4 | PP | 9 | 100 | 0.375 | 75.0 | 27.4 | 52.8 | 0.5 |
| Ex. 5 | PP | 2.5 | 100 | 0.912 | 39.2 | 9.3 | 76.9 | 10.1 |
| Com. Ex. 1 | PP | -- | 100 | 0.500 | -- | 3.5 | 51.8 | 49.8 |
| Com. Ex. 2 | PP | -- | 100 | 0.600 | -- | 18.4 | 50.4 | 48.2 |
| Com. Ex. 3 | PP | 1 | 100 | 1.12 | 25.3 | 7.1 | 81.6 | 29.4 |
| Ex. 6 | NYLON | 5 | 100 | 0.178 | 64.4 | 23.1 | 69.8 | 4.1 |
| Ex. 5 | NYLON | 7 | 100 | 0.150 | 70.0 | 29.7 | 67.5 | 2.8 |
| Com. Ex. 4 | NYLON | -- | 100 | 0.500 | -- | 13.1 | 58.2 | 54.4 |

**Claims**

1. A one-side roughened plane body which comprises a crystalline thermoplastic resin and one side of which is roughened and the other of which is smooth, the plane body being characterized in that the overall haze thereof is not less than 50% and that the internal haze thereof is not more than 15%.

2. The one-side roughened plane body of claim 1 wherein the overall haze thereof is not less than 55% and the internal haze thereof is not more than 12%.

3. The one-side roughened plane body of claim 1 wherein the overall haze thereof is not less than 55%, the internal haze thereof is not more than 12% and the glossiness thereof is not less than 70%.

4. The one-side roughened plane body of claim 1 wherein the crystalline thermoplastic resin is a crystalline polyolefin.

5. The one-side roughened plane body of claim 4 wherein the crystalline polyolefin contains solid substances which remain after the crystalline polyolefin is extracted with boiling heptane in an amount of 70% by weight or higher on the basis of the initial amount of the polyolefin.

6. The one-side roughened plane body of claim 4 wherein the crystalline polyolefin contains solid substances which remain after the crystalline polyolefin is extracted with boiling heptane in an amount of 80% by weight or higher on the basis of the initial amount of the polyolefin.

7. A process for producing a one-side roughened rolled plane body comprising the steps of rolling a plane body of a crystalline thermoplastic resin at a temperature equal to or less than the melting point of the thermoplastic resin and at a thickness reduction of 30% or more to thereby make the internal haze of the plane body 15% or less, and roughening one side of the plane body simultaneously with or after the rolling to make the overall haze of the plane body not less than 50%, said melting point of said resin being defined to be a temperature at which the maximum area-occupying peak of the thermal behavior curve of said resin as determined by differential scanning calorimeter (DSC) according to JIS K7121.

8. A process for producing a one-side roughened rolled plane body of claim 7 wherein the plane body of the crystalline thermoplastic resin is rolled at a temperature equal to or less than the melting point of the thermoplastic resin and at a thickness reduction of 40% or more to thereby make the internal haze of the plane body 12% or less and one side of the plane body is roughened simultaneously with or after rolling, to make the overall haze of the plane body not less than 55%.

9. A process for producing a one-side roughened rolled plane body of claim 7 wherein the surface-roughening treatment is performed by pressing said one side of the plane body by means of a surface-roughened rolling roll having a surface roughness range of 50 to 1,000 mesh (Tyler).

10. A process for producing a one-side roughened rolled plane body of claim 7 wherein the rolling is performed so that the tensile strength observed after the rolling is 3 times that observed before the rolling.